# DEMANDE DE BREVET EUROPEEN

(11) **EP 0 913 907 A1**
(43) Date de publication de la demande: **06.05.1999**
(21) Numéro de dépôt: 98203537.0
(22) Date de dépôt: 20.10.1998
(51) Int. Cl.: H02J 7/35

(54) **Appareil téléphonique comportant un dispositif d'accumulation et dispositif d'accumulation convenant à un tel appareil**

(30) Priorité: 28.10.1997 FR 9713508
(71) Demandeur: Koninklijke Philips Electronics N.V., 5621 BA Eindhoven (NL)
(72) Inventeur: De Crouy-Chanel, Rémy, 75008 Paris (FR); Venant, Sylvain, 75008 Paris (FR)
(74) Mandataire: Chaffraix, Jean

(57) **Abrégé**

Cet appareil électrique comportant un dispositif d'accumulation (10) amovible, couplé à un dispositif de cellule photovoltaïque (20) présente une face avant. La face sensible à la lumière du dispositif (20) est orientée du même côté que ladite face avant

Application : téléphonie sans fil.

## Description

L'invention concerne un appareil électrique présentant une face avant et comportant un dispositif d'accumulation amovible, couplé à un dispositif de cellules photovoltaïques présentant une face sensible à la lumière.

L'invention concerne un dispositif d'accumulation convenant à un tel appareil.

L'invention trouve des applications importantes dans tous les appareils téléphoniques dit "sans fils", par exemple, des appareils téléphoniques satisfaisant à la norme DECT, à la norme GSM, ou bien encore à la norme DCS 1800 etc. A l'aide de ces cellules on arrive à augmenter d'une manière significative la longévité de fonctionnement des dispositifs d'accumulation qui alimentent ces appareils sans fils.

Le brevet allemand n° DE 195 21 135 décrit un tel appareil. Cet appareil comporte un certain nombre de modules de cellules photovoltaïques qui sont rattachés au boîtier de l'appareil.

Il se trouve parfois que la présence de ces cellules est gênante et encombrante, alors qu'elle peut être inutile.

L'invention propose un appareil du genre mentionné dans le préambule pour lequel il est possible d'adjoindre ou non des cellules photoélectriques.

Pour cela, un tel appareil est remarquable en ce que ladite face sensible est orientée du même côté que ladite face avant.

Ainsi, par l'invention, l'utilisateur pourra changer de façon aisée de dispositif d'accumulation : soit, prendre un dispositif normal ne comprenant pas de dispositif de cellules photovoltaïques, soit en prendre un en comportant.

Un autre avantage est que le dispositif de cellules photovoltaïques assure sa fonction lorsque l'utilisateur manoeuvre le clavier ou examine l'écran de son appareil puisque dans ce cas la face sensible est orientée vers la lumière.

En outre, il est intéressant de vendre de façon séparée un dispositif d'accumulation comprenant un tel dispositif de cellules photovoltaïques.

La description suivante faite en regard des dessins ci-annexés, le tout donné à titre d'exemple non limitatif, fera bien comprendre comment l'invention peut être réalisée.
La figure 1 montre un appareil téléphonique conforme à l'invention, vu de face.
La figure 2 montre l'appareil téléphonique de la figure 1 vu de dos.
La figure 3 montre un dispositif d'accumulation conforme à l'invention.
La figure 4 montre le dispositif d'accumulation de la figure 3 vu de dos.
La figure 5 montre plus en détail le mode de réalisation du dispositif de la figure précédente.

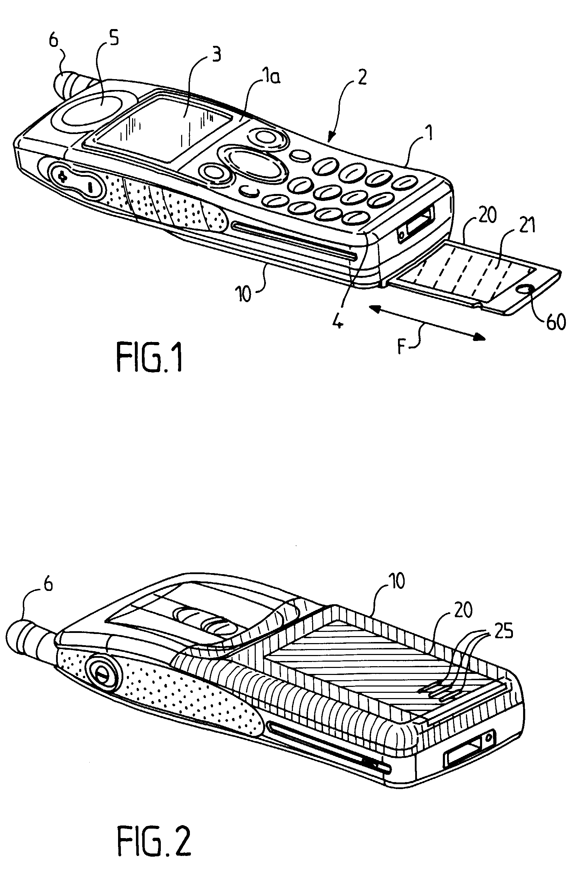

A la figure 1, l'appareil qui est représenté est un appareil téléphonique utilisé, par exemple, pour un système GSM. Il va de soi que l'invention se rapporte à toutes autres sortes d'appareils électriques qui nécessitent un accumulateur. L'appareil de la figure 1 se compose d'un boitier 1 présentant une face avant 1a sur laquelle sont disposés un clavier 2, un écran 3, un microphone 4 et un écouteur 5. Cet appareil comporte également une antenne 6. Cet appareil nécessite un dispositif d'accumulation 10, vu partiellement sur cette figure, pour lui assurer une certaine autonomie en alimentant ses circuits électriques et électroniques non représentés sur cette figure. Pour maintenir un état de charge prolongé, on peut fournir, à ce dispositif, un courant de maintien ou même un courant de recharge provenant d'une cellule photovoltaïque 20. La surface active 21 de cette cellule est hachurée par des lignes discontinues. Le dispositif de cellule photovoltaïque 20 est solidaire mécaniquement du dispositif d'accumulation 10.

Conformément à l'invention, la face 21 active ou sensible du dispositif 20, qui reçoit la lumière, est orientée de la même façon que la face avant de l'appareil.

Selon le mode de réalisation préféré le dispositif 20 se présente sous la forme d'un tiroir. Le tiroir est représenté en position ouverte, à la figure 1. A la figure 2 qui montre, vu de dos, l'appareil téléphonique, le tiroir est montré en position fermée. Sur cette figure 2, le dispositif d'accumulation 10 est représenté par des hachures. Des cannelures 25 permettent aux doigts de l'utilisateur, de saisir et de faire coulisser, comme un tiroir, selon la flèche F, le dispositif 20 pour le mettre respectivement en position ouverte et fermée.

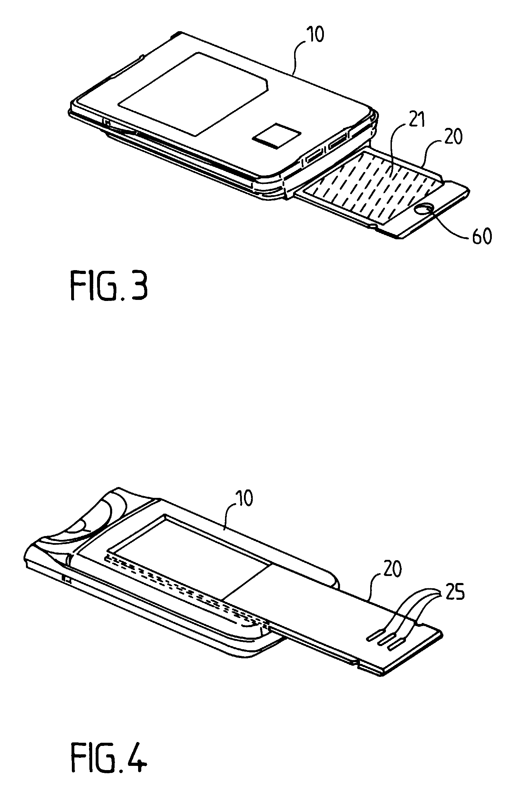

Les figures 3 et 4 montrent, de façon séparée de l'appareil téléphonique, le dispositif d'accumulation.

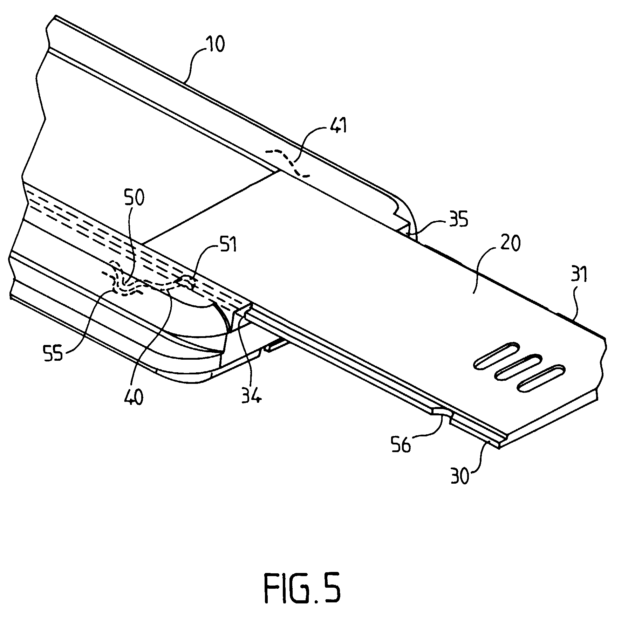

La figure 5 montre en détail comment les contacts électriques, entre le dispositif de cellule photovoltaïque et le dispositif d'alimentation d'une part, et le déplacement en tiroir du dispositif de cellule photovoltaïque d'autre part, sont réalisés. Sur les parois latérales du dispositif 20 sont ménagés, de chaque côté, des rebords 30 et 31 qui pénètrent dans des coulisses 34 et 35 et qui présentent une partie conductrice. Seule la coulisse 34 est visible sur la figure. Dans chaque coulisse est logée une lame de contact à ressort 40 et 41, seul est visible, en pointillé le ressort 40. Le ressort 40 présente deux protubérances 50 et 51 destinées à venir s'encastrer dans deux cavités 55 et 56 respectivement. Ainsi lorsque le dispositif 20 est en position poussée la protubérance 51 pénètre dans la cavité 56 maintenant dans cette position fermée le dispositif 20. Comme les parois latérales sont conductrices les ressorts 40 et 41 assurent le contact électrique du dispositif 20 avec le dispositif 30.

Selon un aspect intéressant de l'invention, le tiroir peut porter un emplacement 60 pour y loger un transducteur électroacoustique, genre microphone ou écouteur. Cet emplacement est repéré aux figures 1 et 3.

## Revendications

1. Appareil électrique présentant une face avant et comportant un dispositif d'accumulation amovible, couplé à un dispositif de cellule photovoltaïque présentant une face sensible à la lumière caractérisé en ce que ladite face sensible est orientée du même côté que ladite face avant.

2. Appareil électrique selon la revendication 1 caractérisé en ce que le dispositif de cellule photovoltaïque est monté à la façon d'un tiroir sur le dispositif d'accumulation coulissant le long de glissières.

3. Appareil électrique selon la revendication 2 caractérisé en ce que les contacts électriques entre le dispositif de cellule photovoltaïque et le dispositif d'accumulation sont assurés par des lignes conductrices montés sur les glissières du tiroir.

4. Appareil électrique selon l'une des revendications 1 à 3 caractérisé en ce que le dispositif de cellule photovoltaïque présente un emplacement pour y loger un transducteur électroacoustique.

5. Dispositif d'accumulation convenant à un appareil électrique selon l'une des revendications 1 à 4 caractérisé en ce qu'il est muni d'un dispositif de cellule photovoltaïque.

6. Dispositif d'accumulation selon la revendications 6 caractérisé en ce que le dispositif de cellule photovoltaïque est monté à la façon d'un tiroir sur le dispositif d'accumulation coulissant le long de glissières.

7. Dispositif d'accumulation selon la revendications 6 caractérisé en ce que les contacts électriques entre le dispositif de cellule photovoltaïque et le dispositif d'accumulation. sont assurés par des lignes conductrices montées sur les glissières du tiroir.

8. Dispositif d'accumulation selon l'une des revendications 5 ou 6 caractérisé en ce que le dispositif de cellule photovoltaïque présente un emplacement pour y loger un transducteur électroacoustique.
